(19) Europäisches Patentamt
European Patent Office
Office européen des brevets

(11) **EP 1 742 102 A1**

(12) **DEMANDE DE BREVET EUROPEEN**

(43) Date de publication:
**10.01.2007 Bulletin 2007/02**

(51) Int Cl.:
***G02F 1/35*** *(2006.01)*     *G02F 1/017* *(2006.01)*

(21) Numéro de dépôt: **06116859.7**

(22) Date de dépôt: **07.07.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **08.07.2005  FR 0507321**

(71) Demandeur: **ALCATEL**
**75008 Paris (FR)**

(72) Inventeur: **Shen, Alexandre**
**75018 Paris (FR)**

(74) Mandataire: **Bréda, Jean-Marc et al**
**Marks & Clerk France**
**31-33, Avenue Aristide Briand**
**94117 Arcueil Cedex (FR)**

(54) **Structure à absorbant optique saturable pour dispositif de régénération de signaux optiques**

(57)     Le domaine de l'invention est celui des dispositifs de régénération de signaux optiques. Elle s'applique plus particulièrement aux systèmes de transmissions longue distance par fibres optiques de données numériques haut débit.

En se propageant, les signaux optiques subissent nécessairement une atténuation et une dégradation de leur rapport signal/bruit. Pour compenser ces dégradations, on utilise généralement des dispositifs de régénération tout optique. L'objet de l'invention est d'assurer une régénération qui élimine en grande partie le bruit, sans utiliser de dispositifs optiques auxiliaires. Cette régénération est assurée par une structure (1) à absorbant optique saturable comportant une cavité optique d'épaisseur L comprenant au moins une couche de matériau actif (2) de facteur de Henry $\alpha_H$ et de variation d'absorption maximale $\Delta\alpha$ telle que l'épaisseur L vaut environ $2\pi/(\alpha_H \Delta\alpha)$.

FIG. 3

EP 1 742 102 A1

**Description**

Le domaine de l'invention est celui des dispositifs de régénération de signaux optiques. Elle s'applique plus particulièrement aux systèmes de transmission à longue distance par fibres optiques de données numériques haut débit. Les débits transmis par ce type de liaison sont typiquement de plusieurs dizaines de gigabits par seconde et peuvent dépasser le térabit par seconde.

Ces transmissions à longue distance peuvent être effectuées, par exemple, au moyens de câbles sous-marins.

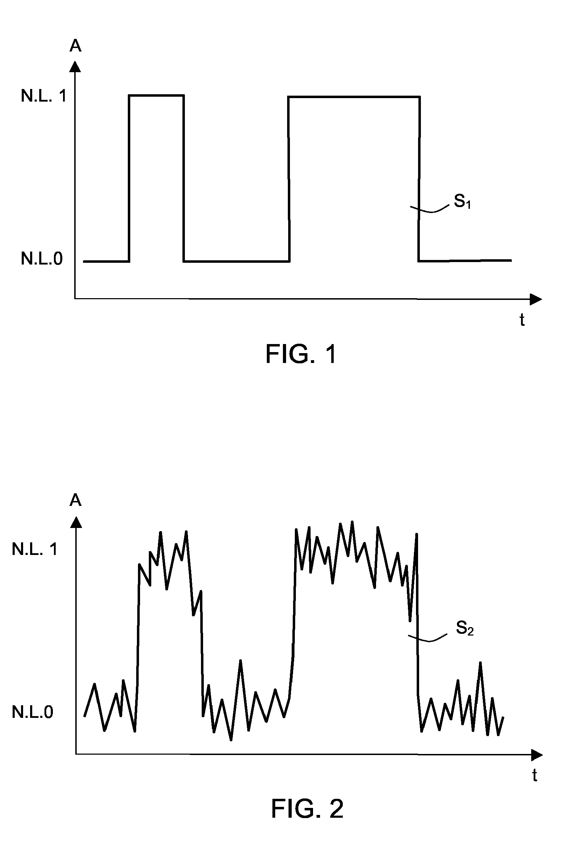

Les signaux optiques numériques S qui se propagent à l'intérieur d'une fibre optique sont constitués d'impulsions temporelles représentant classiquement des niveaux logiques 1 ou 0. A titre d'exemple, la figure 1 représente en fonction du temps, la variation d'amplitude A d'un signal initial $S_1$ comportant une succession de niveaux logiques 1 ou 0. Ces signaux ont généralement un format de type RZ-OOK, acronyme anglo-saxon de Return-to-Zero On-Off Keying. En se propageant, ce signal $S_1$ subit nécessairement une atténuation et une dégradation de son enveloppe et de son rapport signal/bruit comme indiqué sur la figure 2 qui représente le signal $S_2$ après propagation dans une fibre optique.

Pour limiter ce phénomène, une première solution possible consiste à réaliser une gestion de la dispersion optique intervenant le long de la ligne. On utilise à cette fin des sources d'émission puissantes et on limite la distance séparant deux amplificateurs optiques consécutifs en tenant compte de la dispersion chromatique des fibres utilisées. Ces amplificateurs sont, par exemple, du type EDFA, acronyme anglo-saxon signifiant : Erbium Doped Fiber Amplifier.

Une seconde solution consiste, pour que ce signal puisse être exploité correctement, à le régénérer périodiquement. Très classiquement, la régénération comporte 3 processus qui sont appelés :

- Resynchronisation : Le signal subit un bruit de phase. L'impulsion dérive alors temporellement. On appelle également ce phénomène en terminologie anglo-saxone «jitter». Par conséquent, la resynchronisation consiste à resynchroniser les impulsions par rapport à une horloge-référence.
- Réamplification : L'atténuation d'une fibre optique vaut typiquement 0,2 dB/km. Sur de très longues distances, supérieure à 1000 kilomètres, il devient alors nécessaire de réamplifier périodiquement le signal afin qu'il reste exploitable.
- Remise en forme : Le signal subit également un bruit d'amplitude. Les parties basses et hautes des créneaux impulsionnels sont bruitées comme on peut le voir sur la figure 2. Il est donc nécessaire d'éliminer ou d'atténuer ce bruit.

Lorsque l'on met en oeuvre ces 3 processus, on parle de régénération 3R. Il est possible de démontrer que la résynchronisation n'est pas fondamentale pour certaines applications. Il est ainsi possible de réaliser une liaison transocéanique de plus de 6000 kilomètres sans resynchronisation. On parle alors de régénération 2R (Réamplification et Remise en forme).

Pour réaliser cette régénération 2R, une méthode possible consiste à réaliser une première transduction du signal optique initial en signal électronique, puis à traiter le signal électronique ainsi obtenu, enfin à réaliser une seconde transduction du signal traité en signal optique final. Lorsque le signal est multiplexé en longueur d'onde, encore appelé signal WDM, acronyme anglo-saxon signifiant « Wavelength Division Multiplex », il est nécessaire de réaliser une régénération sur l'ensemble des canaux élémentaires composant le signal WDM. Cette méthode présente alors les inconvénients principaux d'être coûteuse et complexe, surtout si le nombre de canaux optiques à traiter est important et bien entendu, les nombreuses transductions opto-électroniques nécessaires diminuent la fiabilité du dispositif.

Aussi, des méthodes dites tout-optique ont été proposées. Généralement, elles reposent sur l'utilisation de structures à absorbant saturable.

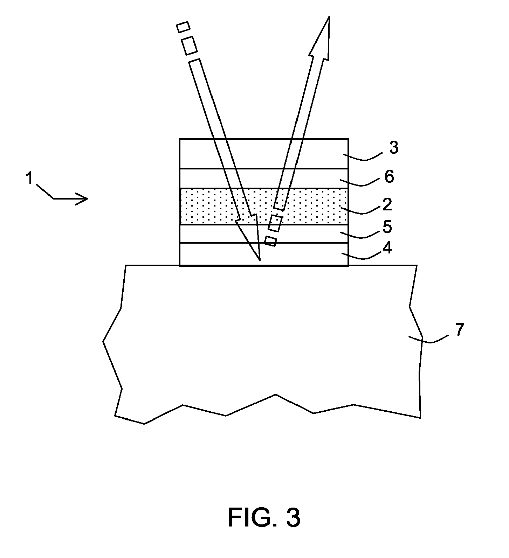

Le principe de la régénération optique à absorbant saturable est exposé sur les figures 3, 4 et 5.

La figure 3 présente une vue en coupe d'une structure optique 1 à absorbant saturable. Cette structure 1 comprend essentiellement :

- Une couche active 2 constituée d'un matériau à absorbant saturable ;
- Deux miroirs réflecteurs 3 et 4 disposés de part et d'autre de la couche active 2 ;
- Des couches dites de phase 5 et 6 disposées entre la couche active 2 et les miroirs réflecteurs 3 et 4.

La structure optique est reportée sur un substrat 7.

La structure fonctionne généralement par réflexion de la lumière. Sur la figure 3, le parcours de la lumière à l'intérieur de la structure est symbolisé par des flèches droites rayées.

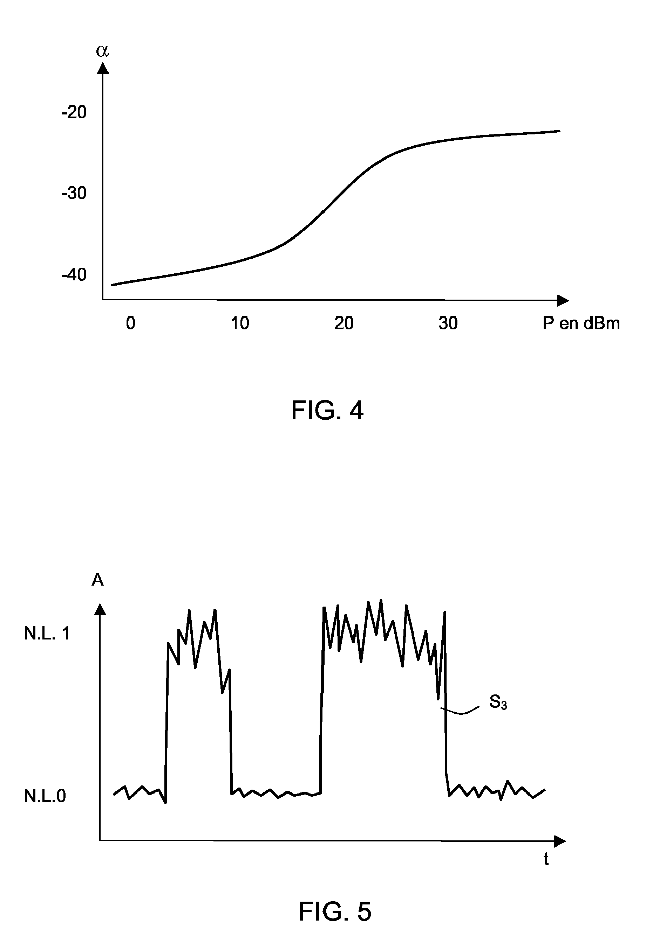

Comme illustré en figure 4, le matériau à absorbant saturable est un matériau dont le coefficient d'absorption $\alpha$ varie avec la puissance lumineuse reçue. Ainsi, les faibles puissances sont fortement absorbées alors que les puissances optiques plus importantes sont faiblement absorbées. La dynamique du phénomène étant très importante, la variation du coefficient d'absorption et la puissance optique sont représentées en échelles logarithmiques, la puissance optique étant classiquement représentée en dBm. 0 dBm correspond à une puissance d'un mW et 30 dBm à une puissance d'1 watt.

Généralement, la couche active 2 de l'absorbant est réalisée soit en matériau ternaire, notamment en InGaAs ou en AlGaAs, soit en matériau quaternaire.

Les miroirs réflecteurs 3 et 4 permettent de générer, à l'intérieur de la couche active de multiples réflexions du signal optique, augmentant ainsi le trajet optique à l'intérieur de la couche active et multipliant son efficacité d'absorption. Afin que les réflexions multiples soient toutes en phase, des couches de phase 5 et 6 permettent d'adapter la longueur optique de la cavité située entre les miroirs 3 et 4.

On a vu que le signal bruité $S_2$ est composé d'impulsions lumineuses en forme de créneaux déformés. Après réflexion sur l'ensemble de la structure, le signal $S_2$ est devenu le signal $S_3$, le bruit parasite des parties basses des créneaux correspondant aux niveaux logiques 0 a été en grande partie absorbé comme illustré en figure 5. On augmente ainsi le rapport signal à bruit des impulsions.

Cependant, cette méthode présente un inconvénient. Comme on le voit sur la figure 5, le bruit parasite des parties hautes des créneaux temporels du signal correspondant aux niveaux logiques 1 n'est pas atténué. On parle ainsi de régénération 1.5R en référence à ce phénomène dans la mesure où seuls les 0 du signal sont régénérés. Aussi, si l'on souhaite une pleine régénération 2R, il est nécessaire de compléter les dispositifs comportant des structures à absorbant saturable par d'autres dispositifs optiques permettant de régénérer les niveaux logiques 1 du signal. Ces dispositifs comprennent généralement des filtres et/ou des fibres de compression.

L'objet de l'invention est d'assurer une régénération 2R sans utiliser de dispositifs optiques auxiliaires au moyen d'une structure à absorbant saturable particulière.

Plus précisément, l'invention a pour objet une structure à absorbant optique saturable pour traiter un signal optique incident de longueur d'onde λ, modulé en amplitude, ladite structure comportant une cavité optique d'indice effectif $n_{eff}$, d'épaisseur géométrique L vérifiant

la relation $L = \dfrac{k.\lambda}{2.n_{eff}}$ , k étant un nombre entier, ladite cavité comprenant au moins une couche de matériau actif, de facteur de Henry $\alpha_H$ et de variation d'absorption maximale $\Delta\alpha$ provoquée par la dynamique en amplitude $\Delta P$ dudit signal incident à traiter, caractérisé en ce que la dynamique en amplitude du signal incident et l'épaisseur géométrique L sont telles que la variation d'absorption maximale $\Delta\alpha$ vérifie la relation $\Delta\alpha = \dfrac{2\pi}{L.\alpha_H}$ .

Avantageusement, la couche active est essentiellement une structure à puits quantiques. Elle peut comporter, dans ce cas, plusieurs dizaines de puits quantiques.

Avantageusement, la couche active a un facteur de Henry $\alpha_H$ supérieur à 50. Elle peut être composée de boîtes ou d'îlôts quantiques.

Avantageusement, au moins une couche dite de phase est disposée entre un des miroirs de la cavité et la couche de matériau actif qui peut être ternaire ou quaternaire.

La structure selon l'invention s'applique avantageusement aux régénérateurs optiques.

L'invention sera mieux comprise et d'autres avantages apparaîtront à la lecture de la description qui va suivre donnée à titre non limitatif et grâce aux figures annexées parmi lesquelles :

- La figure 1 représente la variation temporelle de l'amplitude d'un signal optique initial ;
- La figure 2 représente le même signal après traversée d'une fibre optique ;
- La figure 3 représente la vue en coupe d'une structure à absorbant optique saturable ;
- La figure 4 représente la variante d'absorption en fonction de l'intensité lumineuse d'un absorbant optique saturable selon l'art antérieur ;
- La figure 5 représente le signal optique issu d'une fibre optique après traversée d'une structure à absorbant optique saturable selon l'art antérieur ;
- La figure 6 représente la variante d'absorption en fonction de l'intensité lumineuse d'un absorbant optique saturable selon l'invention ;
- La figure 7 représente le signal optique issu d'une fibre optique après traversée d'une structure à absorbant optique saturable selon l'invention.

L'inconvénient des matériaux à absorbant optique saturable selon l'art antérieur est que le milieu est complètement transparent lorsque l'intensité du signal dépasse un certain seul. Ainsi, le bruit des niveaux logiques 1 n'est plus filtré.

Le coeur de l'invention est d'utiliser une structure de micro-cavité dont l'épaisseur est adaptée aux caractéristiques d'un matériau à absorbant optique saturable. Ainsi, la réponse du matériau varie non seulement à bas niveau mais également à haut niveau. On filtre non seulement le bruit à bas niveau, mais également le bruit à haut niveau, réalisant ainsi une réelle régénération 2R.

On sait que, dans les matériaux à absorbant optique saturable, la variation d'indice différentiel $\dfrac{\partial n}{\partial N}$ qui correspond à la variation de l'indice optique n en fonction du porteurs de charges N, et la variation d'absorption

différentielle $\dfrac{\partial \alpha}{\partial N}$ qui correspond à la variation du coefficient d'absorption α en fonction du porteurs de charges N sont liées par une relation de proportionnalité qui vaut :

$$\alpha_H = \frac{4\pi}{\lambda} \cdot \frac{\dfrac{\partial n}{\partial N}}{\dfrac{\partial \alpha}{\partial N}}$$

avec $\alpha_H$ : facteur de Henry

et $\lambda$ : longueur d'onde dans le vide du signal optique.

Pour une variation totale d'indice $\Delta n$, la variation du coefficient d'absorption $\Delta\alpha$ induite par la dynamique de l'amplitude du signal optique incident vaut donc :

$$\alpha_H = \frac{4\pi}{\lambda} \cdot \frac{\Delta n}{\Delta \alpha} \qquad \text{équation 1}$$

La variation d'indice $\Delta n$ entraîne une variation de phase $\Delta\varphi$ du signal optique qui vaut classiquement :

$$\Delta\varphi = \frac{2\pi}{\lambda} \cdot \Delta n.L$$

avec L : épaisseur géométrique de la cavité optique.

Pour obtenir la variation d'absorption souhaitée, il faut que la variation de phase $\Delta\varphi$ soit au moins égale à $\pi$.

On obtient alors la relation reliant l'épaisseur effective de la cavité et les caractéristiques $\alpha_H$ et $\Delta\alpha$ du matériau :

$$\Delta\alpha = \frac{2\pi}{L.\alpha_H} \qquad \text{équation 2}$$

On a vu que, pour maximiser l'effet de l'absorbant, la couche active est disposée entre deux miroirs réflecteurs permettant de générer, à l'intérieur de la couche active de multiples réflexions du signal optique. Bien entendu, cet effet n'est possible que si les réflexions successives sont en phase et que, par conséquent, l'épaisseur de la cavité vérifie l'équation 3 ci-dessous :

$$L = \frac{k.\lambda}{2.n_{eff}}$$

$n_{eff}$ étant l'indice effectif du milieu et

k : un nombre entier.

Il est nécessaire que les équations 2 et 3 soient vérifiées simultanément. On obtient alors l'équation 4 :

$$\Delta\alpha = \frac{4.\pi.n_{eff}}{\alpha_H.k.\lambda}$$

Connaissant tous les paramètres du dispositif, cette équation permet de déterminer la variation du coefficient d'absorption $\Delta\alpha$ nécessaire. Il est, bien entendu, possible de faire varier le paramètre k qui détermine l'épaisseur de la cavité pour optimiser la variation du coefficient d'absorption $\Delta\alpha$.

On en déduit alors la dynamique $\Delta P$ de l'amplitude du signal optique incident permettant de générer cette variation. L'absorption $\alpha$ est liée à la puissance optique P par la relation classique :

$$\alpha = \frac{\alpha_0}{1 + \dfrac{P}{P_{sat}}}$$

$P_{sat}$ : puissance optique à saturation

Soit encore,

$$\frac{P}{P_{sat}} = \frac{\alpha_0}{\alpha} - 1$$

Par conséquent, la variation d'absorption $\Delta\alpha$ induite par la dynamique $\Delta P$ de l'amplitude du signal optique vaut :

$$\frac{\Delta P}{P_{sat}} = \frac{\alpha_0}{\alpha^2} \cdot \Delta\alpha$$

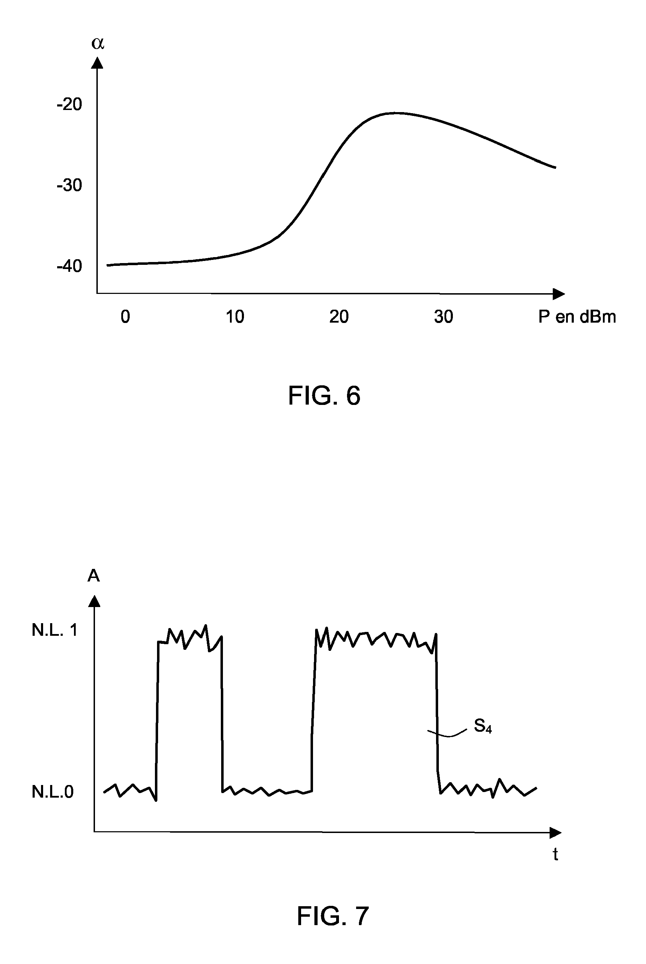

Lorsque l'équation 4 est vérifiée, le coefficient de réflexion varie avec la puissance lumineuse reçue comme illustré en figure 6. Après être passé par un maximum, il diminue lorsque la puissance optique continue de croître. Ainsi, après réflexion sur le composant à absorbant saturable, le bruit parasite des parties basses des créneaux correspondant aux niveaux logiques 0 et le bruit parasite des parties hautes des créneaux correspondant aux niveaux logiques 1 est en partie absorbé comme illustré sur le signal $S_4$ de la figure 7. Dans ce cas, la fonction de régénération est pleinement 2R. On augmente alors le rapport signal à bruit des impulsions.

Si l'on souhaite conserver des structures de dimensions réalistes, le facteur de Henry $\alpha_H$ doit être relativement élevé, supérieur à 10 et si possible supérieur à 50.

La réalisation de structures à semi-conducteurs permet d'obtenir les facteurs de Henry qui conviennent. Elle peuvent être :

- soit bidimensionnelles, comportant une pluralité de « puits quantiques » ou en terminologie anglo-saxonne « Quantum Wells», le nombre de puits quantiques pouvant être de plusieurs dizaines ;
- soit quasi-ponctuelles à « îlots quantiques » encore appelés « boîtes quantiques » ou en terminologie anglo-saxonne « Quantum Dots ».

Les îlots quantiques sont des micro-structures qui comportent une quantité minuscule d'électrons libres. Elles sont fabriquées dans des matériaux de type semi-conducteur et ont des dimensions comprises entre quelques nanomètres et quelques microns. La taille et la forme de ces structures et donc le nombre d'électrons qu'elles contiennent, peuvent être précisément contrôlées; ce nombre variant entre un simple électron à un ensemble de plusieurs milliers d'électrons. Comme dans un atome, les niveaux d'énergie dans un îlot quantique sont quantifiés, ce qui rend ces structures particulièrement intéressantes pour un grand nombre d'applications physiques.

A titre de premier exemple non limitatif, une première structure à îlots quantiques selon l'invention a les caractéristiques suivantes :

- Longueur d'onde d'utilisation $\lambda$ : 1555 nanomètres
- Miroir avant :

  - Structure optique : Empilement de 4 couches comprenant 2 couches de silice (Si02) et 2 couches d'oxyde de titane (TiO2) ;
  - Indice optique $n_{TiO2}$ du TiO2 : 2,266
  - Epaisseur des couches de TiO2 : $\lambda/4n_{TiO2}$
  - Indice optique $n_{siO2}$ du SiO2 : 1,468
  - Epaisseur des couches de TiO2 : $\lambda/4n_{SiO2}$

- Couches de phase :

  - Coefficient d'absorption non saturable : $5.10^{-4}$/micron

- Milieu actif

  - Structure à îlots quantiques
  - Méthode de réalisation : Stransky - Krastanov
  - Matériau déposé : InAs
  - Matériau des couches de séparation : InGaAsP
  - Epaisseur des couches actives comportant des îlots : 9 nanomètres
  - Coefficient d'absorption non saturée : 1/micron
  - Epaisseur des couches de séparation: 7 nanomètres
  - Coefficient d'absorption non saturable : $5.10^{-4}$/micron
  - Facteur de Henry : < 60

- Miroir arrière

  - Matériau : Argent

  - Indice optique $n_{AG}$: 0,2
  - Coefficient d'absorption : 27.8/micron

- Substrat : Silicium

A titre de second exemple non limitatif, une seconde structure à puits quantiques selon l'invention a les caractéristiques suivantes :

- Longueur d'onde d'utilisation $\lambda$ : 1555 nanomètres
- Miroir avant :

  - Structure : Empilement de 4 couches comprenant 2 couches de silice (Si02) et 2 couches d'oxyde de titane (TiO2) ;
  - Indice optique $n_{TiO2}$ du TiO2 : 2,266
  - Epaisseur des couches de TiO2 : $\lambda/4n_{TiO2}$
  - Indice optique $n_{siO2}$ du Si02 : 1,468
  - Epaisseur des couches de TiO2 : $\lambda/4n_{SiO2}$

- Couches de phase :

  - Coefficient d'absorption non saturable : $5.10^{-4}$/micron

- Milieu actif

  - Structure à puits quantiques
  - Matériaux du couple puits quantique/barrière: InGaAlAs/InGaAlAs ou InGaAs/InP accordés en maille sur InP
  - Epaisseur des puits quantiques: 9 nanomètres
  - Coefficient d'absorption non saturée: 1/micron
  - Epaisseur des barrières: 7 nanomètres
  - Coefficient d'absorption non saturable : $5.10^{-4}$/micron
  - Facteur de Henry : ~ 10
  - Nombre de puis quantiques : ~ 80

- Miroir arrière

  - Matériau : Argent
  - Indice optique $n_{AG}$ : 0,2
    Coefficient d'absorption : 27.8/micron.

- Substrat : Silicium

Dans cet exemple, l'utilisation d'un grand nombre de puits quantiques peut entraîner des dissipations thermiques importantes. L'utilisation de miroirs arrière métalliques directement en contact avec le substrat permet de faciliter l'évacuation des calories.

**Revendications**

1. Structure (1) à absorbant optique saturable pour traiter un signal optique incident de longueur d'onde $\lambda$,

modulé en amplitude, ladite structure comportant une cavité optique d'indice effectif n$_{eff}$, d'épaisseur géométrique L vérifiant la relation $L = \dfrac{k.\lambda}{2.n_{eff}}$ , k étant un nombre entier, ladite cavité comprenant au moins une couche (2) de matériau actif, de facteur de Henry α$_H$ et de variation d'absorption maximale Δα provoquée par la dynamique ΔP en amplitude dudit signal incident à traiter, **caractérisé en ce que** la dynamique ΔP en amplitude du signal incident et l'épaisseur géométrique L sont telles que la variation d'absorption maximale Δα vérifie la relation

$$\Delta\alpha = \frac{2\pi}{L.\alpha_H} \ .$$

2.  Structure à absorbant optique saturable selon la revendication 1, **caractérisé en ce que** la couche active (2) est essentiellement une structure à puits quantiques.

3.  Structure à absorbant optique saturable selon la revendication 2, **caractérisé en ce que** la couche active (2) comporte plusieurs dizaines de puits quantiques.

4.  Structure à absorbant optique saturable selon la revendication 1, **caractérisé en ce que** la couche active (2) a un facteur de Henry α$_H$ supérieur à 50.

5.  Structure à absorbant optique saturable selon la revendication 4, **caractérisé en ce que** la couche active (2) est composée de boîtes ou d'îlots quantiques.

6.  Structure à absorbant optique saturable selon l'une des revendications précédentes, **caractérisé en ce que** au moins une couche (5, 6) dite de phase est disposée entre un des miroirs de la cavité et la couche de matériau actif.

7.  Structure à absorbant optique saturable selon l'une des revendications précédentes, **caractérisé en ce que** le matériau actif est ternaire ou quaternaire.

8.  Régénérateur optique pour signaux optiques, **caractérisé en ce qu'**il comporte au moins une structure à absorbant optique saturable selon l'une des revendications précédentes.

FIG. 1

FIG. 2

1

3
6
2
5
4

7

FIG. 3

α

-20

-30

-40

0      10      20      30      P en dBm

## FIG. 4

A

N.L. 1

N.L.0

$S_3$

t

## FIG. 5

FIG. 6

FIG. 7

**Office européen**

**des brevets**

**RAPPORT DE RECHERCHE EUROPEENNE**

Numéro de la demande

EP 06 11 6859

## DOCUMENTS CONSIDERES COMME PERTINENTS

| Catégorie | Citation du document avec indication, en cas de besoin,<br>des parties pertinentes | Revendication concernée | CLASSEMENT DE LA DEMANDE (IPC) |
|---|---|---|---|
| X | MASSOUBRE D ET AL: "High speed, high switching contrast quantum well saturable absorber for 160 Gbit/s operation"<br>2005 CONFERENCE ON LASERS AND ELECTRO-OPTICS (CLEO) 22-27 MAY 2005 BALTIMORE, MD, USA,<br>vol. 3, 22 mai 2005 (2005-05-22), pages 1593-1595, XP002375774<br>IEEE Piscataway, NJ, USA<br>* le document en entier *<br>----- | 1,2,6-8 | INV.<br>G02F1/35<br><br>ADD.<br>G02F1/017 |
| X | EP 1 229 588 A (ALCATEL)<br>7 août 2002 (2002-08-07)<br>* alinéa [0015] - alinéa [0018] *<br>* alinéa [0028] - alinéa [0031] *<br>* alinéa [0043] - alinéa [0046] *<br>* abrégé; figure 2a *<br>----- | 1,4,5,7,8 | |
| X | OUDAR J-L ET AL: "ULTRA-FAST QUANTUM-WELL SATURABLE ABSORBER DEVICES AND THEIR APPLICATION TO ALL-OPTICAL REGENERATION OF TELECOMMUNICATION OPTICAL SIGNALS DISPOSITIFS A ABSORBANT SATURABLE ULTRA-RAPIDE A PUITS QUANTIQUES ET APPLICATION A LA REGENERATION TOUT-OPTIQUE DES"<br>ANNALES DES TELECOMMUNICATIONS - ANNALS OF TELECOMMUNICATIONS, GET LAVOISIER, PARIS, FR,<br>vol. 58, no. 11/12,<br>novembre 2003 (2003-11), pages 1667-1707, XP001192439<br>ISSN: 0003-4347<br>* page 1682, alinéa 3; figures 12,14 *<br>* abrégé *<br>-----<br>-/-- | 1-3,7,8 | DOMAINES TECHNIQUES RECHERCHES (IPC)<br><br>G02F<br>H04B |

Le présent rapport a été établi pour toutes les revendications

| Lieu de la recherche | Date d'achèvement de la recherche | Examinateur |
|---|---|---|
| Munich | 28 juillet 2006 | Ammerlahn, D |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document correspondant

EPO FORM 1503 03.82 (P04C02)

**Office européen**
**des brevets**

# RAPPORT DE RECHERCHE EUROPEENNE

Numéro de la demande

EP 06 11 6859

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 291 707 A (ALCATEL) 12 mars 2003 (2003-03-12) * le document en entier * ----- | 1-8 | |
| A | EP 1 122 582 A (DDI CORPORATION; KDD SUBMARINE CABLE SYSTEMS INC) 8 août 2001 (2001-08-08) * abrégé * ----- | 1-8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 28 juillet 2006 | Ammerlahn, D |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 11 6859

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-07-2006

| Document brevet cité au rapport de recherche | | Date de publication | Membre(s) de la famille de brevet(s) | | Date de publication |
|---|---|---|---|---|---|
| EP 1229588 | A | 07-08-2002 | FR | 2820517 A1 | 09-08-2002 |
| | | | JP | 2002277910 A | 25-09-2002 |
| | | | US | 2002105743 A1 | 08-08-2002 |
| EP 1291707 | A | 12-03-2003 | FR | 2829246 A1 | 07-03-2003 |
| | | | US | 2003043484 A1 | 06-03-2003 |
| EP 1122582 | A | 08-08-2001 | JP | 2001215542 A | 10-08-2001 |
| | | | US | 2001012430 A1 | 09-08-2001 |

EPO FORM P0460

Pour tout renseignement concernant cette annexe : voir Journal Officiel de l'Office européen des brevets, No.12/82